# EUROPEAN PATENT SPECIFICATION

(11) **EP 3 775 695 B1**
(45) Date of publication and mention of the grant of the patent: **27.07.2022**
(21) Application number: 19720155.1
(22) Date of filing: 14.02.2019
(51) Int. Cl.: F24B 1/00

(54) **OVEN FOR THE PREPARATION OF FOOD**
OFEN FÜR DIE ZUBEREITUNG VON SPEISEN
FOUR POUR LA PRÉPARATION DES ALIMENTS

(30) Priority: 14.02.2018 NL 2020437
(43) Date of publication of application: 17.02.2021
(73) Proprietor: H. De Gooijer Beheer B.V., 1135 AS Edam (NL)
(72) Inventor: DE GOOIJER, Johan Hendrik, 1135 AS Edam (NL)
(74) Representative: de Hoog, Johannes Hendrik
(86) International application number: PCT/NL2019/050096
(87) International publication number: WO 2019/177452

(56) References cited:
- GB-A- 2 431 566
- GB-A- 2 489 421
- SE-C1- 122 842
- US-A- 1 759 773
- US-A- 4 320 736
- US-A- 4 800 865

## Description

### TECHNICAL FIELD

The invention relates to an oven for the preparation of food, more particularly to a portable stovetop or barbecue-style oven.

### BACKGROUND

A high temperature bake oven is known from US2009/0064985A1. The oven includes a source of heat, a first stone-like plate located above the heat source receiving an item to be baked, a second stone-like plate located above the first plate, and an housing enclosing the first and second plates forming a bake oven chamber between the first and second plates having a front opening directing convection heat upwardly from the heat source against the first and second plates and between the plates over and item to be baked.

US1759773A discloses an over adapted to be used in conjunction with a gas stove or burner. The oven is of simple structure and may be used for baking or cooking food and the top of the oven may be used for frying at the same time that baking of food is carried on within the oven, thereby getting two services from the same heat. A baffle plate is in position within the body of the oven and includes a inclined bottom portion, an upstanding portion at the rear edge of the bottom portion, and flanges which are spaced from the inner surfaces of the side walls of the body of the oven. The heat and products of combustion pass up between the flanges and up through the opening, against the underside of the top plate, then downward through the racks and out under the lower edge of the oven.

SE122842C1 discloses a gas furnace. The hot gases flow upwards through side channels into a furnace chamber. The gases flow through openings at its front and rear of a bottom of the furnace chamber downward to a chamber between the burner and the bottom of the furnace chamber.

Another oven for baking bread products is known from GB2489421A. The pizza oven comprises a platen for receiving a bread product on an upper surface; a lower cavity below the platen and an upper cavity above the platen. An inlet and an outlet are arranged for providing an air flow for heating the platen and the upper cavity. The construction of inlet, outlet and upper cavity is such that a laminar flow of heated air flows across the upper surface of the platen on which pizza dough is placed. This creates high and even temperatures in the cooking region. However, videos on the internet show that the pizza dough must be rotated 180 degrees half way through the cooking time to obtain a good baking result on all sides of the pizza.

GB2431566 discloses a portable 'tandoor' oven that can be placed above a burner of a conventional stove. The oven comprises a globe formed of two hemispherical domes. A dish may be placed within a aperture to fuction as a flame propagator and as a receptacle for fat, charcoal and herbs.

### SUMMARY

It is an object of the invention to provide an improved portable oven for the preparation of food, such as pizzas or other products that has to be prepared at high temperatures, which overcomes at least one disadvantage described above.

According to the invention, this object is achieved by an oven having the features of claim

1. Advantageous embodiments and further ways of carrying out the invention may be attained by the measures mentioned in the dependent claims.

According to a first aspect of the invention, there is provided an oven for the preparation of food. The oven comprises a food preparation cavity formed by a base part and a roof part. An access opening between the base part and the roof part provides access for food to the food preparation cavity. The base part comprises a lower side forming a bottom space adapted to collect heated gas and to deflect the heated gas to one or more first ducts between the bottom space and the food preparation cavity. A baking stone is provided in the oven with a carrier plane, preferably at a level corresponding to a lower edge of the access opening. The oven further comprises a door part and gas exhaust ducts. The door part is adapted to the close the access opening between the base part and the roof part. A cross-section of the gas exhaust ducts is at a level below the carrier plane.

The basic idea of the present application is based on the insight that exhaust openings above the carrier plane results in an unevenly distributed heat emission to the food product. First of all, an exhaust opening in the roof part could not radiate heat to the food product. Furthermore, relative cold air is drawn into the preparation cavity via the lower side of the exhaust opening. Consequently, the side of the baking product facing the exhaust opening is less heated. To obtain a more or less equally baked product, the food product has to be rotated 180 degrees half way the preparation time. By having a food preparation cavity which is above the carrier plane fully surrounded by a heat emitting surface and gas exhaust duct forming an exhaust gas flow path with an upper surface which is at least partially lower than the carrier plane, the food preparation is improved and there is no need to turn the product half way through the preparation time. Furthermore, there is no incoming ambient air, with a relatively low temperature, disturbing the heat emission to the food product.

According to the invention, the one or more first ducts are coupled to a first bottom side area of the cavity and the gas exhaust ducts are coupled to a second bottom side area of the cavity opposite the first bottom side area. These features enable that flow of heated gas has to travel through the cavity and along the food before the gas flows out of the cavity via the gas exhaust ducts

In a further embodiment, two gas exhaust ducts are positioned at opposite sides of the second bottom side area of the food preparation cavity. This feature improves the heat distribution in the cavity and reduces the air flow rate enabling the gas flow to transfer its heat to the food product and the roof part.

According to the invention, the first ducts are positioned in the food preparation cavity opposite the access opening. This feature reduces the risk of a user sustaining burn injuries, and the ease of use of the oven.

In an embodiment, one or more gas exhaust ducts are formed by a structure of the base part. This feature reduces the number of parts of the oven and thereby its production cost.

According to the invention, the base part comprises a bottom plate section between the food preparation cavity and the bottom space. This feature enables to reduce the amount of material of the base part and consequently the warm-up time of the oven. Furthermore, the bottom plate section is surrounded by a wall section of the base part. In a further embodiment, the bottom plate section extends upwards in the direction of the first ducts. This feature improves the flow of heated gas in the direction of the one or more first ducts.

In an embodiment, the wall section comprises a ring-shaped lower side, forming a support surface configured to position the oven on a support structure of a first type heat source. The base part further comprises a support surface structure arranged at the bottom plate section in the bottom space. The support surface structure is configured to position the oven on a support structure of a second type heat source, the support structure of the second type heat source being smaller than the support structure of the first type heat source. This feature allows for the oven to be positioned on heat sources with a different size support surface without the need for a special adapter.

In an embodiment, the base part comprises one or more support surfaces for positioning a food carrier, in the form of a baking stone, horizontally on the base part and at distance from the upper surface of the bottom plate section. This feature enables that the heat transfer from bottom plate section to baking stone is mainly by radiant heat. This reduces the risk of burning the bottom of the food product. In a further embodiment, the space between the baking stone and bottom plate section is wedge-shaped.

In an embodiment, the base part comprises a recess for positioning smoking elements. In a further embodiment, the recess is a through hole located out of the centre of the bottom plate section. In a further embodiment, the smoking elements include a removable receptacle for receiving smoking wood and designed to cover the recess. These features enable one to use the oven as smoker oven. By having the recess out of the centre, the smoking elements will be in contact with flame of a gas stove burner. As a result, the smoking wood will burn quickly and the temperature in the oven does not have to rise much to create enough smoke in the food preparation cavity.

In an embodiment, the oven comprises a hinge structure configured to pivot the door part along an axis parallel to the lower edge of the access opening. The hinge structure is formed by a protruding part of the base part cooperating with a protruding part of the door part. As the protruding parts engage, the door part can easily be detached from the base part. In a further embodiment, in an open state of the oven the hinge structure is configured to position the door part horizontally and in the open state the door part is horizontally aligned with the lower edge of the access opening. In this way, the door part can be used as sliding surface to slide for example a pizza in the oven. In a further embodiment, in the open state the door part cannot be detached from the base part. This prevents that a heated door part falls on the ground when sliding a food product in the oven. In a further embodiment, in a closed state the door part seals the access opening and in a position between the closed state and the open state the door part can be detached from the base part. In this way, the risk that the door part gets detached unintentionally is reduced.

In an embodiment, the base part is one piece of aluminium. It has been found that an aluminium base part could resist the high temperatures needed in a pizza oven. A person skilled in the art would advise to use cast iron and would expect that a base part of cast aluminium could not resist the high temperatures. This feature reduces the total weight of the oven.

Other features and advantages will become apparent from the following detailed description, taken in conjunction with the accompanying drawings which illustrate, by way of example, various features of embodiments.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 illustrates a perspective bottom view of an exemplary embodiment of an oven;
Fig. 2 illustrates an exploded view of the oven;
Fig. 3 illustrates a cross-section of the oven;
Fig. 4A and 4B illustrates a cross-section of the oven in closed and open state.
Fig. 5 illustrates a bottom view of the base part;
Fig. 6 illustrates a side view of the oven;
Fig. 7 illustrates a top view of the base part; and,
Fig. 8 illustrates a perspective view of the base part provided with elements to make the oven suitable for smoking.

### DETAILED DESCRIPTION

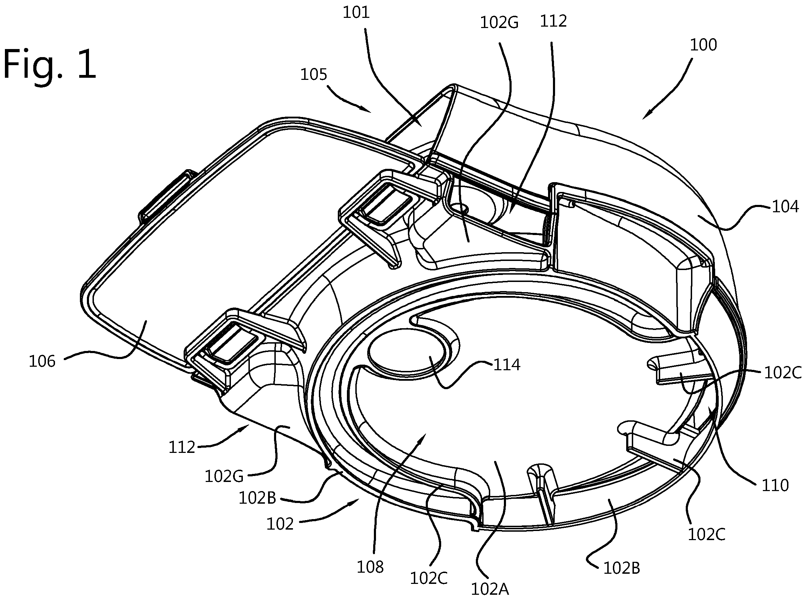

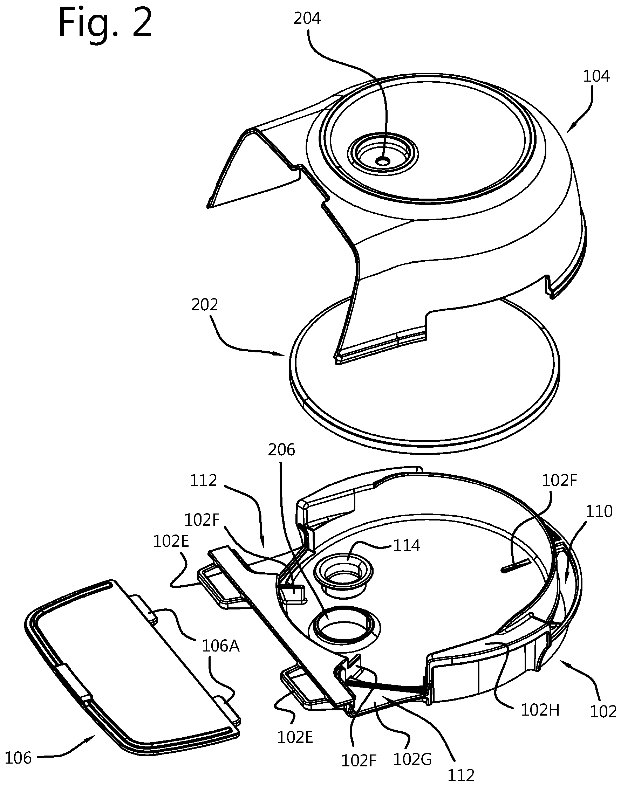

Fig. 1 shows a perspective bottom view of the oven 100 for the preparation of food according to the present application. The oven 100 has to be used with a heat source that generates a hot-air flow, such as a stovetop with gas burners or gas cooker, air heater with or without fan and barbecue style cooker. Fig. 2 shows an exploded view of the oven in Fig. 1. Food that can be prepared in the oven includes, but is not limited to: dough products, pizzas, and pita bread. The oven can be disassembled into four main parts. These parts are: a base part 102, a roof part 104, a door part 106 and a food carrier 202. In Fig. 2 the food carrier according to the invention is a baking stone. Other possible food carriers include but are not limited to: furnace grid, oven grid, baking plate. In Fig. 1 a small part of the baking stone can be seen through gas exhaust duct 112. The base part 102, roof part 104 and door part 106 could be made of cast iron, cast aluminium, injection moulded aluminium or any other material that is resistant to the temperatures required to heat up the oven to and maintain a temperature in the range 300 - 400°C in the food preparation cavity. For example if the material is a Zamac alloy the maximum temperature should not increase 380°C. Other materials that might be used include but are not limited to: die casting aluminium alloys such as: A360, A380

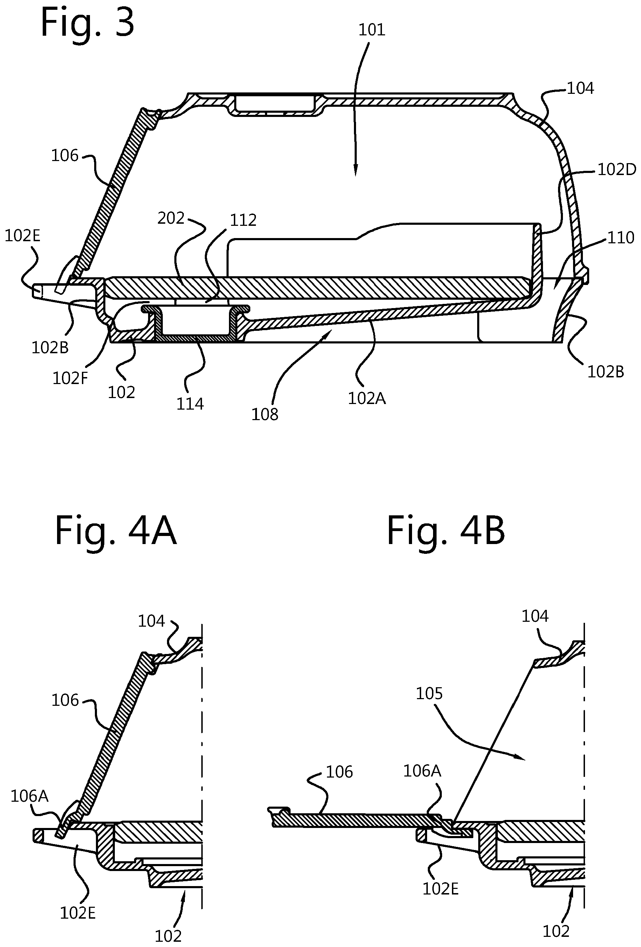

The base part 102 and roof part 104 together form a food preparation cavity 101 with an access opening 105. The access opening 105 can be closed with door part 106. The base part 102 comprises a bottom plate section 102A which is surrounded by a wall section 102B. The cavity below the bottom plate section 102 and between wall section 102B forms a bottom space 108. The bottom space is adapted to collect heated gas and to deflect the heated gas to one or more first ducts 110 between the bottom space 108 and the food preparation cavity 105. Fig. 3 shows that the bottom plate section 102A has a bottom side which extends upwards in the direction of the one or more first ducts 110. The one or more first ducts 110 are located at the backside of the oven, they are openings in the base part 102 located between the bottom plate 102A and the wall section 102B.

The base part, roof part and door part have a wall thickness in the range of 3 mm - 5mm. Preferably, the walls of the oven have an average thickness of 4 mm.

The oven 100 further comprises two gas exhaust ducts 112. According to the invention, one gas exhaust duct is on the left side of the oven and the other gas exhaust duct is on the right side of the oven. The gas exhaust ducts 112 extend downwards along the food carrier and have a cross-section at a level below the carrier plane of the food carrier 202. Thus the one or more first ducts 110 are coupled to a first bottom side area of the food preparation cavity 105, i.e. at the backside of the cavity, and the gas exhaust ducts are coupled to a second bottom side area of the food preparation cavity 105, i.e. at the front side of the cavity. In the present embodiment, two gas exhaust ducts are provided at opposite sides at the front side of the food preparation cavity.

In the embodiment shown, a gas exhaust duct ends in a recess of a wall section 102B of the base part 102. The wall section 102B forms a circumferential side wall of the base part 102. The bottom plate 102A is surrounded by the wall section 102B. The inlet of a gas exhaust duct 112 is an opening in the plane of the baking stone between the baking stone and the roof part 104. The walls of the gas exhaust ducts are formed by the sections 102G of the base part 102. The outlet of a gas exhaust duct is formed by an opening in the outside of the oven between the base part 102 and the roof part, wherein the opening is at a level below the carrier plane of the baking stone. Other embodiments of gas exhaust ducts are possible as long as a part of the gas exhaust duct has a cross section which is below the carrier plane of the food carrier. This feature prevents unheated air from flowing into the food preparation cavity via the gas exhaust ducts.

The oven 100 operates as follows: The oven is positioned on a gas heating source. The heated gas rises and is collected in the bottom space 108 below the upwardly inclined bottom plate 102A. The rising gas is forced to flow in the direction of the one or more first ducts 110 at the backside of the oven. The heated gas flow flows through the one or more first ducts into the food preparation space above the bottom plate 102A. The heated gas flows first along the bottom surface of the roof part. This flow heats up the inner surface of the roof part 104 to a temperature in the range of 300 - 400°C. The roof part 104 will emit radiant heat to the food product in the food preparation cavity 101. The flow of heated gas will flow along the inner surface of the roof part in the direction of the front side of the food preparation cavity. Simulations have shown that this heated gas flow is mainly in a middle area in the top of the food preparation cavity. A small part of the flow will flow directly from the first ducts along the ceiling of cavity formed by the roof part to the gas exhaust duct. The remaining part of the flow flows back along the left and right side of the food preparation cavity from the front, towards the back of the oven. Two downward swirling air streams arise in the food preparation cavity, one in the left half and one in the right half of the food preparation cavity. The temperature of the gas decreases as it swirls downwards. So, at the top of the food preparation cavity, the temperature of the gas flow is higher than it is at the level of the food. Consequently, the temperature of the heating stone will be less than the temperature of the roof part. The roof part emits radiant heat to the food product in the food preparation cavity more evenly than a gas flow could transfer heat to the food product. As a result, the food products will be cooked more evenly, reducing the risk that parts of the food product burns. Furthermore, in most cases, there is no need to rotate food product during the baking process. Simulations have shown that in a pre-heated oven the temperature of the flow in top of the food preparation cavity is about 400°C and just above the baking stone about 350°C or lower. The temperature of the gas flow at the outlet of the gas exhaust ducts is around about 300°C.

Fig. 2 further discloses a recess 206 in the base part 102. This recess is optional. The recess is a through hole located out of the centre of the bottom plate section 102A. A removable sealing cap 114 can be used to close the recess. The sealing cap is made from a material similar to the base part 102 and has a thickness in a range comparable to the thickness of bottom plate section 102A, making the cap suitable for when the oven is used at high temperatures. The recess is preferably located between the centre of the bottom plate section and the front side of the oven. As a result of this, a user could easily position a replaceable container with smoking elements in the through hole. Opening 204 in the roof part is configured to attach a temperature meter to the oven for measuring the temperature in the food preparation cavity 101. In this way, the opening 204 is sealed by the temperature meter. The base part 102, roof part 104 and the door part 106, closing the access opening to the food preparation cavity, form together a closed cavity with inlet openings coupled to the first ducts for receiving a heated gas flow and outlet openings coupled to the gas exhaust ducts 112. Furthermore, the base part comprises two handles 102H designed for lifting and moving the oven by a user.

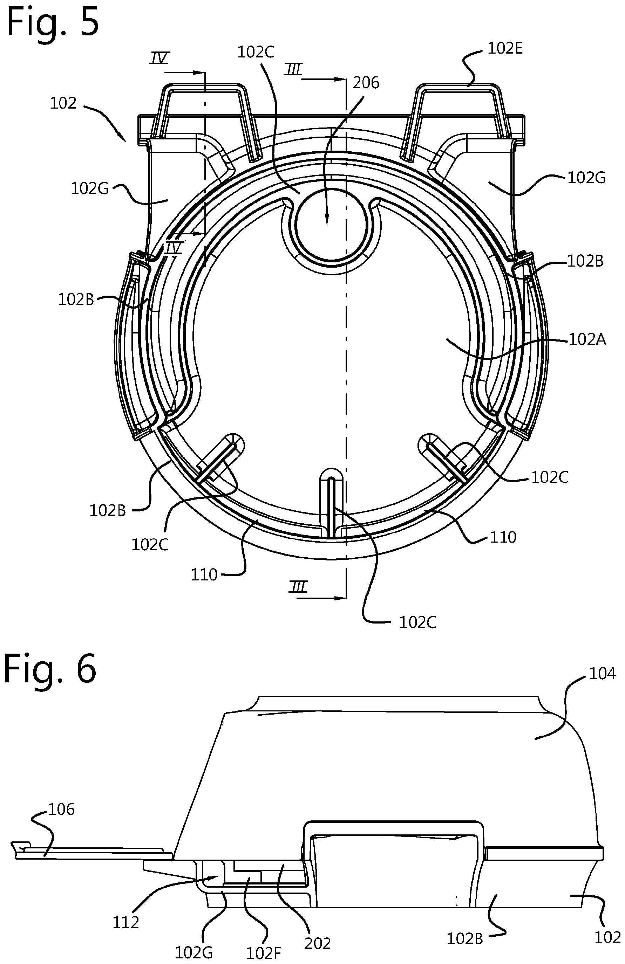

Fig. 3 shows a cross-sectional view of the oven along the line III - III in Fig. 5. From this figure can be seen that the base part 102 comprises a bottom plate section 102A between the food preparation cavity 101 and the bottom space 108. The bottom plate section 102A and the sealing cap 114 have preferably a wall thickness in the range of 4 - 6mm. The roof part 104 and door part 106 have a similar wall thickness. The bottom space 108 is the space below the bottom plate section 102A and the circular wall section 102B. The underside of the bottom plate section extends upwards in the direction of the first ducts. The upwardly inclined underside of the bottom plate deflects the rising heated gas in the bottom space 108 in the direction of the first ducts 110. The first ducts form a channel located between the shielding structure 102D and the wall section 102B of the base part 102 and the backside wall of the roof part 104. The shielding structure 102D directs the flow of heated gas to the upper part of the food preparation cavity 101 and prevents the flow of heated gas from the bottom space from flowing directly over the food product. Parts of the food product would burn if they came into direct contact with the flow of heated gas leaving the first ducts. The shielding structure 102D partially around the circumference of the baking stone 202 increases the distance the heated gas flow must travel before it reaches the surface of the food product. As a result, the temperature of the gas flowing along the surface of the food product is lower than the temperature of the gas flowing through the first ducts. Simulations have shown that the difference in temperature between of the heated gas flow entering the food preparation cavity of the gas flowing just above the food product could be more than 50°C.

Fig. 3 further shows that gas exhaust duct 112 is at a level below the carrier plane and even at least partially below the baking stone. The top side of the outlet of the gas exhaust duct is defined by the lower edge of the roof part 104. The lower edge is at a level below the top surface of the baking stone 202. Consequently, the gas exhaust ducts on both the left and right side of the oven have a cross-section at a level below the carrier plane of the food carrier. As a result, the full flow of exhaust gas passes through the exhaust ducts beneath the plane defined by the top surface of the baking stone.

Fig. 3 further shows that when using a baking stone as food carrier, there is a space between the baking stone 202 and the bottom plate section 102A. This space reduces the heat transfer from the bottom plate section to the baking stone as the heat is mainly transferred by thermal radiation heat and almost not by thermal conduction and thermal convection. This is only possible when there is almost no flow of heated gas from the food preparation cavity 101 flowing down a side the baking stone 202 and subsequently through the space between the baking stone 202 and the bottom plate section 102A. Fig. 3 shows that the baking stone 202 fits well in the base part 102 and that there is negligible minimal gap between the annular edge of the baking stone 102 and the base part 102, such that the baking stone can be positioned in the base part 102 and that there will be no flow of heated gas between the baking stone 202 and the bottom plate section 102A of the base part 102. As a result of this, the temperature of the heating stone will be lower than the temperature of the bottom plate section 102A. In the present embodiment, three support structures 102F are provided to position the baking stone 202 horizontally in the oven and at distance from the inclined bottom plate section 102A. The three support structures 102F are ribs on the bottom plate section with an upper edge which are in a horizontal plane. It might be clear to those skilled in the art that other support structures could easily be designed to position a baking stone horizontally in the food preparation cavity. To avoid conductive heat transfer from the base part to the baking stone, the upper surface of the support structure(s) carrying the baking stone should not be too large.

Figs 4A and 4B show a cross-sectional view, providing details for the door part 106 in closed and open state respectively along the line IV - IV in Fig. 5. The oven comprises a hinge structure configured to pivot the door part along an axis parallel to the lower edge of the access opening. The hinge structure is formed by a protruding part of the base part 102E cooperating with a protruding part 106A of the door part. The protruding part 102E comprises a rectangular opening in which the protruding part 106A is inserted. In an open state of the oven the hinge structure is configured to position the door part horizontally. Furthermore in the open state the top surface of the door part is horizontally aligned with the lower edge of the access opening 105, which means that the difference in height of the lower edge of the access opening and the top surface of the door part 106 is less than 1 cm. In open state, the lower surface of the protrusion 106A is at a lower level than the main part of the door part. The door part is configured to seal the access opening 105. In another embodiment, a groove is provided next to the protrusion 106A. The groove is configured to receive at least partially the protruding part 102E of the base part 102. Consequently, in the open state the door part cannot be detached from the base part as the construction of the protrusions 102E, 106A is such that the door part cannot be moved in both horizontal and vertical direction.

In a closed state the door part seals the access opening and in a position between the closed state and the open state the door part can be detached from the base part. In closed state, the door part is positioned slanted against the edges of the roof part 104 forming the side and upper edge is the access opening to the food preparation cavity. Gravity will keep the door part closed.

Fig. 5 illustrates a bottom view of the base part. The top side of Fig. 5 corresponds to the front side of the oven with the access opening to the food preparation cavity. The bottom side of Fig. 5 corresponds to the backside of the oven. The protrusions 102E, which are part of the hinge structure, can be seen. The sections 102G which form the walls of the gas exhaust ducts are set below the protrusions 102E. The wall section 102B is located around the bottom plate section 102A. At the bottom of Fig. 5 the openings 110 between the bottom plate section 102A and the wall section 102B, which form the one or more first ducts 110, are shown. The circular lower edge of the wall section 102B forms a first support surface to position the oven on a support structure of a heating device. Second support structure 102C forms a support surface to position the oven on a smaller support structure of a heating device. The second support structure 102C is formed by three radial ribs under the bottom plate section 102A and one curved rib under the bottom plate section with a radius smaller than the radius of the circular wall section 102B. Advantageously, the support surfaces of the first support structure are in a plane which is parallel to but differs from the plane formed by the support surface of the second support structure. The plane formed by the support surface of the second support structure is preferably in the bottom space of the base part 102.

Fig. 6 illustrates a side view of the oven in open state. It shows that gas exhaust duct 112 is set below the carrier plane and even at least partially set below the baking stone. The top side of the outlet of the gas exhaust duct is defined by the lower edge of the roof part 104. The lower edge is at a level below the top surface of the baking stone 202. Consequently, the gas exhaust ducts at both the left and right side of the oven have a cross-section at a level below the carrier plane of the food carrier.

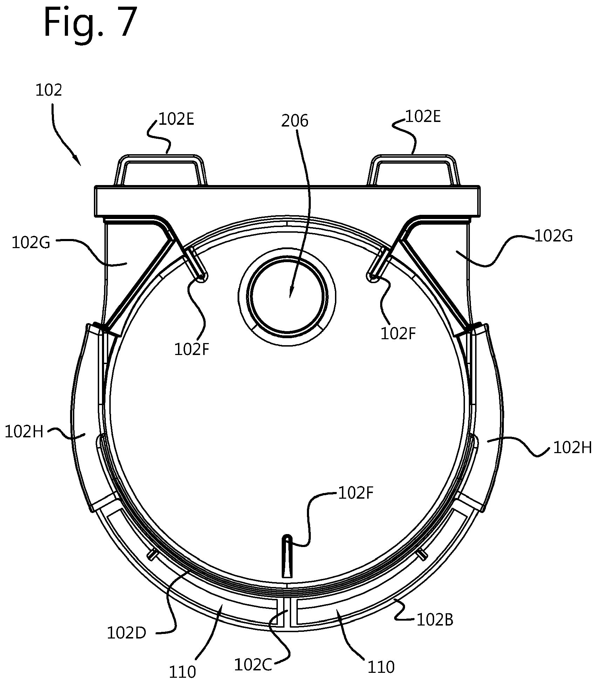

Fig. 7 illustrates a top view of the base part 102. This figure shows clearly the position of the first ducts 110, wall section 102B, shielding structure 102D, protruding parts 102E, forming a part of the hinge structure, support surfaces 102F of the ribs on the bottom plate section to support a baking stone, sections 102G forming the wall parts of the gas exhaust ducts and two handles 102H at left and right side of the base part 102.

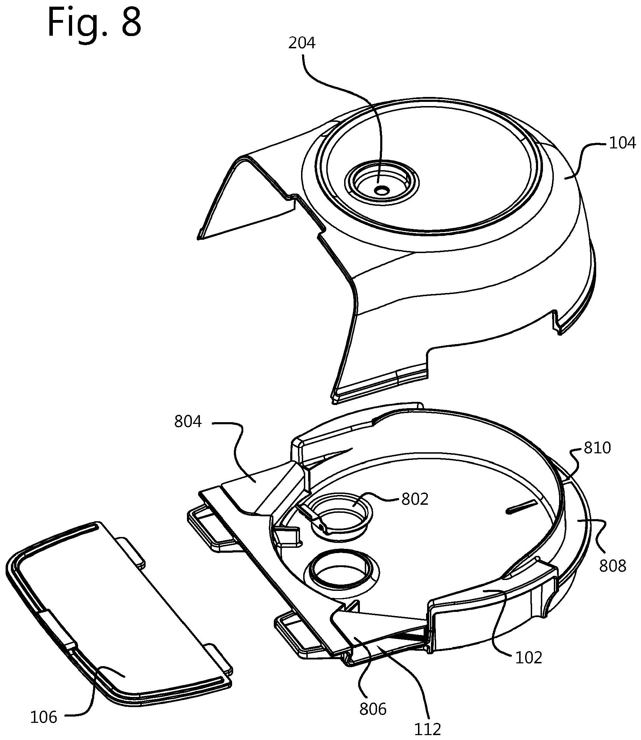

Fig. 8 illustrates a perspective view of the base part provided with sealing elements to make the oven suitable for smoking. Sealing element 802 covers the recess 206 in the bottom plate section 102A of the base part 102. The sealing element 802 is a receptacle in which smoking elements can be placed. The sealing element 802 is made from a material having a good thermal conductivity, for example stainless steel or aluminium. A deep drawing process can be used to form the sealing element 802. The bottom of the sealing element 802 is preferably thin for example about 1mm thick. The recess is located in the bottom plate section such that it is set above the flames of a gas stove. In this way, minimal heat is required to burn the smoking elements in the receptacle, so that smoking can be done while keeping the temperature in the food preparation cavity low. By placing the recess in the front half of the base part 102, structure of the recess a receptacle could easily be placed in the recess and minimally hinders the heated gas to flow to the first ducts 110 when using the oven at high temperatures. The receptacle could be made of any metal having a good thermal conductivity, including but not limited to aluminium, iron, and stainless steel.

Sealing elements 804 and 806 seal the gas exhaust ducts and sealing elements 808 and 810 seal the first ducts extending from the bottom space below the bottom plate section 102A to the food preparation cavity above the bottom plate section 102A. It might be clear that for smoking, the baking stone must be replaced by a baking grate which in turn is placed on the ribs on the bottom plate section 102A or any other structure, so that that the smoke surrounds the food to be smoked. Furthermore, it might also be clear that the door part 106, in closed state, seals the access opening 105 sufficiently for the generated smoke in the food preparation cavity 101 to be kept inside the oven. This could be done by coinciding structures on the edge of the door part that correspond on the edges around the access opening.

## Claims

1. An oven (100) for the preparation of food, the oven comprising a food preparation cavity (101) formed by a base part (102) and a roof part (104), where an access opening (105) between the base part and the roof part provides access for food to the food preparation cavity, the base part comprises a lower side forming a bottom space (108) adapted to collect heated gas and to deflect the heated gas to one or more first ducts (110) between the bottom space and the food preparation cavity, a baking stone is provided in the oven with a carrier plane,
**characterized in that**,
the oven further comprises a door part (106) and gas exhaust ducts (112), the door part is adapted to close the access opening between the base part and the roof part, a cross-section of the gas exhaust ducts (112) is at a level below the carrier plane, wherein the one or more first ducts (110) are coupled to a first bottom side area of the cavity positioned in the food preparation cavity opposite the access opening (105) and the gas exhaust ducts are coupled to a second bottom side area of the cavity opposite the first bottom side area, one is on the left side of the oven and the other is on the right side of the oven, wherein the base part (102) comprises a bottom plate section (102A) positioned between the food preparation cavity (101) and the bottom space (108) and a wall section (102B) surrounding the bottom plate section (102A), the baking stone (202) is horizontally placed on the base part (102) and at distance from the upper surface of the bottom plate section (102A), such that the baking stone is mainly heated by thermal radiation.

2. The oven according to claim 1, wherein gas exhaust ducts (112) are formed by a structure of the base part.

3. The oven according to any of the claims 1 - 2, wherein the bottom plate section (102A) extends upwards in the direction of the first ducts (110).

4. The oven according to any of the claims 1 - 3, wherein the wall section (102B) comprises a ring shaped lower side configured to position the oven on a support structure of a first type heat source, the base part further comprises a support structure (102C) arranged at the bottom plate section (102A) in the bottom space (108) configured to position the oven on a support structure of a second type heat source, the support structure of the second type heat source being smaller than the support structure of the first type heat source.

5. The oven according to any of the claims 1 - 4, wherein the base part comprises one or more support surfaces (102F) to position the baking stone (202).

6. The oven according to any of the claims 1 - 5, wherein the space between the baking stone and bottom plate section is wedge-shaped.

7. The oven according to any of the claims 1 - 6, wherein the base part (102) comprises a recess (206) for positioning smoking elements.

8. The oven according to claim 7, wherein the recess (206) is a through hole located out of the centre of the bottom plate section (102A).

9. The oven according to any of the claims 7 - 8, wherein the smoking elements include a removable receptacle for receiving smoking wood and designed to cover the recess.

10. The oven according to any of the claims 1 - 9, wherein the oven comprises a hinge structure configured to pivot the door part along an axis parallel to the lower edge of the access opening, the hinge structure is formed by a protruding part of the base part (102E) cooperating with a protruding part (106A) of the door part.

11. The oven according to claim 10, wherein in an open state of the oven the hinge structure is configured to position the door part horizontally and in the open state the door part is horizontally aligned with the lower edge of the access opening.

12. The oven according to claim 11, wherein in the open state the door part cannot be detached from the base part.

13. The oven according to any of the claims 10 - 12, wherein in a closed state the door part seals the access opening and in a position between the closed state and the open state the door part can be detached from the base part.

14. The oven according to any of the claims 1 - 13, wherein the carrier plane is at a level corresponding to a lower edge of the access opening.

15. The oven according to any of the claims 1 - 14, wherein the base part (102) is one piece of aluminium.

## Patentansprüche

1. Ofen (100) für die Zubereitung von Lebensmitteln, wobei der Ofen einen Lebensmittelzubereitungshohlraum (101) umfasst, der durch ein Basisteil (102) und ein Deckenteil (104) gebildet ist, wobei eine Zugangsöffnung (105) zwischen dem Basisteil und dem Deckenteil Zugang für Lebensmittel zu dem Lebensmittelzubereitungshohlraum bereitstellt, wobei das Basisteil eine Unterseite umfasst, die einen Bodenraum (108) bildet, der dazu ausgelegt ist, erwärmtes Gas zu sammeln und das erwärmte Gas zu einem oder mehreren ersten Kanälen (110) zwischen dem Bodenraum und dem Lebensmittelzubereitungshohlraum zu lenken, wobei ein Backstein in dem Ofen mit einer Trägerebene bereitgestellt ist,
**dadurch gekennzeichnet, dass**
der Ofen ferner einen Türteil (106) und Gasablasskanäle (112) umfasst, wobei der Türteil dazu ausgelegt ist, die Zugangsöffnung zwischen dem Basisteil und dem Deckenteil zu verschließen, wobei sich ein Querschnitt der Gasablasskanäle (112) auf einer Höhe unterhalb der Trägerebene befindet, wobei der eine oder die mehreren ersten Kanäle (110) mit einem ersten bodenseitigen Bereich des Hohlraums gekoppelt sind, der in dem Lebensmittelzubereitungshohlraum gegenüber der Zugangsöffnung (105) positioniert ist, und die Gasablasskanäle mit einem zweiten bodenseitigen Bereich des Hohlraums gegenüber des ersten bodenseitigen Bereichs gekoppelt sind, wobei sich einer auf der linken Seite des Ofens befindet und sich der andere auf der rechten Seite des Ofens befindet, wobei das Basisteil (102) einen Bodenplattenabschnitt (102A), der zwischen dem Lebensmittelzubereitungshohlraum (101) und dem Bodenraum (108) positioniert ist, und einen Wandabschnitt (102B), der den Bodenplattenabschnitt (102A) umgibt, umfasst, wobei der Backstein (202) horizontal auf dem Basisteil (102) und in einem Abstand von der oberen Fläche des Bodenplattenabschnitts (102A) derart platziert ist, dass der Backstein hauptsächlich durch thermische Strahlung erwärmt wird.

2. Ofen nach Anspruch 1, wobei die Gasablasskanäle (112) durch eine Struktur des Basisteils gebildet sind.

3. Ofen nach einem der Ansprüche 1 - 2, wobei sich der Bodenplattenabschnitt (102A) in der Richtung der ersten Kanäle (110) nach oben erstreckt.

4. Ofen nach einem der Ansprüche 1 - 3, wobei der Wandabschnitt (102B) eine ringförmige Unterseite umfasst, die dazu ausgestaltet ist, den Ofen auf einer Stützstruktur einer ersten Art von Wärmequelle zu positionieren, wobei der Basisteil ferner eine Stützstruktur (102C) umfasst, die an dem Bodenplattenabschnitt (102A) in dem Bodenraum (108) angeordnet ist, die dazu ausgestaltet ist, den Ofen auf einer Stützstruktur einer zweiten Art von Wärmequelle zu positionieren, wobei die Stützstruktur der zweiten Art von Wärmequelle kleiner als die Stützstruktur der ersten Art von Wärmequelle ist.

5. Ofen nach einem der Ansprüche 1 - 4, wobei der Basisteil eine oder mehrere Stützflächen (102F) zum Positionieren des Backsteins (202) umfasst.

6. Ofen nach einem der Ansprüche 1 - 5, wobei der Raum zwischen dem Backstein und dem Bodenplattenabschnitt keilförmig ist.

7. Ofen nach einem der Ansprüche 1 - 6, wobei der Basisteil (102) eine Aussparung (206) zum Positionieren von Räucherelementen umfasst.

8. Ofen nach Anspruch 7, wobei die Aussparung (206) ein Durchgangsloch ist, das sich außerhalb der Mitte des Bodenplattenabschnitts (102A) befindet.

9. Ofen nach einem der Ansprüche 7 - 8, wobei die Räucherelemente einen entfernbaren Behälter umfassen, der zum Aufnehmen von Räucherholz dient und dazu konzipiert sind, die Aussparung zu bedecken.

10. Ofen nach einem der Ansprüche 1 - 9, wobei der Ofen eine Scharnierstruktur umfasst, die dazu ausgestaltet ist, den Türteil entlang einer Achse parallel zu der Unterkante der Zugangsöffnung zu schwenken, wobei die Scharnierstruktur durch einen hervorstehenden Teil des Basisteils (102E) gebildet ist, der mit einem hervorstehenden Teil (106A) des Türteils zusammenwirkt.

11. Ofen nach Anspruch 10, wobei in einem geöffneten Zustand des Ofens die Scharnierstruktur dazu ausgestaltet ist, den Türteil horizontal zu positionieren, und in dem geöffneten Zustand der Türteil horizontal mit der Unterkante der Zugangsöffnung ausgerichtet ist.

12. Ofen nach Anspruch 11, wobei in dem geöffneten Zustand der Türteil nicht von dem Basisteil abgenommen werden kann.

13. Ofen nach einem der Ansprüche 10 - 12, wobei in einem geschlossenen Zustand der Türteil die Zugangsöffnung abdichtet und in einer Position zwischen dem geschlossenen Zustand und dem geöffneten Zustand der Türteil von dem Basisteil abgenommen werden kann.

14. Ofen nach einem der Ansprüche 1 - 13, wobei die Trägerebene in einer Höhe ist, die einer Unterkante der Zugangsöffnung entspricht.

15. Ofen nach einem der Ansprüche 1 - 14, wobei der Basisteil (102) ein Stück aus Aluminium ist.

## Revendications

1. Four (100) pour la préparation d'aliments, le four comprenant une cavité de préparation d'aliments (101) formée par une partie base (102) et une partie toit (104), une ouverture d'accès (105) entre la partie base et la partie toit donnant accès pour les aliments à la cavité de préparation d'aliments, la partie base comprenant un côté inférieur formant un espace inférieur (108) propre à collecter un gaz chauffé et à dévier le gaz chauffé vers un ou plusieurs premiers conduits (110) entre l'espace inférieur et la cavité de préparation d'aliments, une pierre de cuisson étant placée dans le four avec un plan de support,
**caractérisé en ce que**
le four comprend en outre une partie porte (106) et des conduits d'évacuation de gaz (112), la partie porte est propre à fermer l'ouverture d'accès entre la partie base et la partie toit, une section transversale des conduits d'évacuation de gaz (112) est à un niveau situé sous le plan de support, le ou les premiers conduits (110) étant accouplés à une première région latérale inférieure de la cavité se trouvant dans la cavité de préparation d'aliments à l'opposé de l'ouverture d'accès (105) et les conduits d'évacuation de gaz étant accouplés à une seconde région latérale inférieure de la cavité à l'opposé de la première région latérale inférieure, l'une étant située sur le côté gauche du four et l'autre sur le côté droit du four, la partie base (102) comprenant une section formant plaque inférieure (102A) placée entre la cavité de préparation d'aliments (101) et l'espace inférieur (108) et une section formant paroi (102B) entourant la section formant plaque inférieure (102A), la pierre de cuisson (102) étant placée horizontalement sur la partie base (102) et à une certaine distance de la surface supérieure de la section formant plaque inférieure (102A), de telle sorte que la pierre de cuisson soit chauffée principalement par rayonnement thermique.

2. Four selon la revendication 1, dans lequel les conduits d'évacuation de gaz (112) sont formés par une structure de la partie base.

3. Four selon l'une quelconque des revendications 1 - 2, dans lequel la section formant plaque inférieure (102A) s'étend vers le haut dans la direction des premiers conduits (110).

4. Four selon l'une quelconque des revendications 1 - 3, dans lequel la section formant paroi (102B) comprend un côté inférieur de forme annulaire conçu pour la disposition du four sur une structure de support d'une source de chaleur d'un premier type, la partie base comprend en outre une structure de support (102C) disposée au niveau de la section formant plaque inférieure (102A) dans l'espace inférieur (108) conçue pour la disposition du four sur une structure de support d'une source de chaleur d'un second type, la structure de support de la source de chaleur du second type étant plus petite que la structure de support de la source de chaleur du premier type.

5. Four selon l'une quelconque des revendications 1 - 4, dans lequel la partie base comprend une ou plusieurs surfaces de support (102F) pour la disposition de la pierre de cuisson (202).

6. Four selon l'une quelconque des revendications 1 - 5, dans lequel l'espace entre la pierre de cuisson et la section formant plaque inférieure est cunéiforme.

7. Four selon l'une quelconque des revendications 1 - 6, dans lequel la partie base (102) comprend un renfoncement (206) pour la disposition d'éléments de fumage.

8. Four selon la revendication 7, dans lequel le renfoncement (206) est un trou débouchant décentré vis-à-vis de la section formant plaque inférieure (102A).

9. Four selon l'une quelconque des revendications 7 - 8, dans lequel les éléments de fumage comprennent un réceptacle amovible destiné à recevoir du bois de fumage et conçu pour couvrir le renfoncement.

10. Four selon l'une quelconque des revendications 1 - 9, le four comprenant une structure de charnière conçue pour faire pivoter la partie porte le long d'un axe parallèle au bord inférieur de l'ouverture d'accès, la structure de charnière étant formée par une partie saillante (102E) de la partie base coopérant avec une partie saillante (106A) de la partie porte.

11. Four selon la revendication 10, dans lequel, dans un état ouvert du four, la structure de charnière est conçue pour placer la partie porte horizontalement et, dans l'état ouvert, la partie porte est alignée horizontalement avec le bord inférieur de l'ouverture d'accès.

12. Four selon la revendication 11, dans lequel, dans l'état ouvert, la partie porte ne peut pas être détachée de la partie base.

13. Four selon l'une quelconque des revendications 10 - 12, dans lequel, dans un état fermé, la partie porte ferme hermétiquement l'ouverture d'accès et, dans une position entre l'état fermé et l'état ouvert, la partie porte peut être détachée de la partie base.

14. Four selon l'une quelconque des revendications 1 - 13, dans lequel le plan de support est à un niveau correspondant à un bord inférieur de l'ouverture d'accès.

15. Four selon l'une quelconque des revendications 1 - 14, dans lequel la partie base (102) est une pièce d'aluminium.
